# EUROPEAN PATENT SPECIFICATION

(11) **EP 3 740 940 B1**
(45) Date of publication and mention of the grant of the patent: **05.07.2023**
(21) Application number: 18804780.7
(22) Date of filing: 29.10.2018
(51) Int. Cl.: G07C 9/21, G07C 9/27, G07C 9/28, H02J 7/00, G09G 3/34

(54) **IDENTIFICATION BADGE SYSTEM**
AUSWEISSCHILDSYSTEM
SYSTÈME DE BADGE D'IDENTIFICATION

(30) Priority: 15.01.2018 US 201815871889
(43) Date of publication of application: 25.11.2020
(73) Proprietor: Safepass, Inc., Frisco, TX (US)
(72) Inventor: HUFF, Ronald, James, Frisco, TX 75033 (US); PENA, Pedro, Luis, Miami, FL 33165 (US)
(74) Representative: FRKelly
(86) International application number: PCT/US2018/058048
(87) International publication number: WO 2019/139663

(56) References cited:
- WO-A1-2018/151746
- GB-A- 2 466 026
- US-A1- 2012 023 422
- US-A1- 2014 266 590
- US-A1- 2014 333 412
- US-A1- 2016 379 426

## Description

### RELATED APPLICATION

This patent application is a continuation-in-part of U.S. Patent Application No. 15/871,889, filed January 15, 2018, pending, which is a continuation-in-part of U.S. Patent Application No. 15/437,291, filed February 20, 2017, abandoned.

### FIELD OF THE INVENTION

The present invention relates to a system for identification badges and, in particular, to a system for issuing and maintaining identification badges, especially visitor identification badges.

### BACKGROUND OF THE INVENTION

Many employers require that employees wear badges for identifying authorized personnel in an employer's facility. Many of those employers, therefore, also require visitors or other temporary personnel, such as hourly staff, to wear badges to confirm that the visitor has checked-in at a designated checkpoint. Beyond safeguarding against misuse of an employer's intellectual property, such check-in is often required so that, in the event of an emergency, all persons may be accounted for.

U.S. Patent No. 7,733,231B2 (Carney et al) describes a security device with a printed portion and a display portion. The printed portion includes a printed photograph and printed information relating to the person's identification, occupation, security level, etc. The display portion may be an e-paper surface or other type of display, that displays information, by text or image, based on data from another security device. For example, the display portion may display the default information "Inactive," alongside the printed portion of the device. Carney et al describe a variety of embodiments of the security badge, many that are very complex in scope, but most relate to use by a person on a more permanent and long-term basis than for a visitor's badge.

That is, such a security badge as described in Carney et al may be well-suited to a permanent use by a full time employee. However, it is very complex for a visitor or temporary personnel badge.
US 2014/333412 A1 discloses a virtual badge which can be displayed on an electronic device, comprises images and data which can be scanned, and the capability to self-destruct according to an administrator's specifications.

Some companies print visitor identification information on a label having an adhesive backing. Adhesive backings however often fail on some fabrics (for example, heavy woven wool), while being too aggressive on other fabrics (for example, lightweight silk). Alternatively, the label may be designed to be carried in a plastic sleeve that can be pinned or clipped to a visitor's article of clothing or hung from a visitor's neck with a lanyard, for example. Still other companies provide a generic "visitor" badge that demonstrates that the visitor has passed through an identification check-point and is authorized to be on site. However, many badges do not provide a display that can be readily authenticated by security personnel or other employees walking past a visitor in a hallway, for example. Without an image of the person for whom the badge was intended, visitor badges may be inadvertently or fraudulently provided to unauthorized persons. Furthermore, label printers are notorious for breaking down or running out of ink at the most inopportune times, for example, when a large number of visitors arrive at the same time or a very important visitor is awaiting check-in. Finally, it is becoming increasingly important to track visitors, hourly and other temporary personnel in real-time with a historical record of their locations during their visit for safety and security purposes.

There is a need for an identification badge system that is more easily implemented. There is also a need for an identification badge system that is reusable and can provide real-time location tracking of the wearer of the badge.

### BRIEF DESCRIPTION OF THE DRAWINGS

The system of the present invention will be better understood by referring to the following detailed description of preferred embodiments and the drawings referenced therein, in which:
Fig. 1 is a front elevation view of one embodiment of an identification badge system of the present invention;
Fig. 2 is a top plan view of the identification badge system of Fig. 1;
Fig. 3 is a front elevation view of one embodiment of a reusable badge of the identification badge system of the present invention;
Fig. 4 is a perspective view of another embodiment of an identification badge system of the present invention;
Fig. 5 is a bottom plan view of another embodiment of a reusable badge of the identification badge system of the present invention;
Fig. 6A is a front elevation view of yet another embodiment of a reusable badge of the identification badge system of the present invention; and
Fig. 6B is a front elevation view of a further embodiment of a reusable badge of the identification badge system of the present invention.

### SUMMARY OF THE INVENTION

According to one aspect of the present invention, there is provided an identification badge according to claim 1.

The reusable badge also includes a Wi-Fi transponder and associated circuitry which is used for tracking visitor location and sending push notifications to the badge by sending a radio frequency signal to Wi-Fi routers or Bluetooth beacons in a facility. This tracking includes real-time location tracking and in one embodiment provides for historical location tracking information to be stored in a secure location apart from the digital visitor badge. The reusable badge further includes a Radio Frequency Identification tag (RFID tag) which can communicate with standard access control readers, writers, and controllers at secure facilities, for example.

### DETAILED DESCRIPTION OF THE INVENTION

The present invention provides an identification badge system that is readily implemented at an identification checkpoint, for example, in the lobby of an employer's facility or other restricted access facility. The identification badge system of the present invention is also adaptable to receiving images of pre-authorized visitors or guests to a large function, conference, or the like.

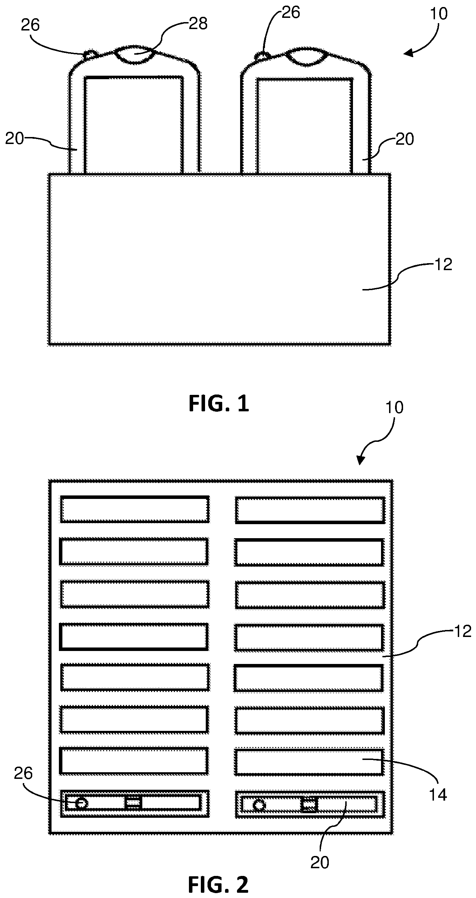

Referring now to the drawings, Figs.1 and 2 illustrate one embodiment of an identification badge system 10 of the present invention. The identification badge system 10 of the present invention has a base station 12. The base station 12 has at least one docking receptacle 14 for docking a reusable badge 20. In the embodiment shown in Figs. 1 and 2, the base station 12 has 16 docking receptacles 14 for receiving up to 16 reusable badges 20 at one time. Other numbers and configurations of docking receptacles 14 are possible without departing from the spirit of the present invention.

The base station 12 can be connected to a computer (not shown) for providing a user interface with the base station 12. Connection to a computer may be particularly advantageous at a permanent security or reception desk or office of a controlled access building for example. Alternatively, the base station 12 may be adapted to receive any required information for operating on a standalone basis. Such an operation may be particularly applicable at a check-in table at a conference or other large function where a check-in table is set up on a temporary basis. The base station 12 may house a single board computer (not shown) that provides a user interface via a web browser.

In either case, the base station 12 is adapted to communicate with an image relaying device (not shown), directly, or indirectly through a computer. The image relaying device may be an image capture device, such as a camera or a scanner capable of scanning a photo ID of a visitor or guest. In this case, the operator of the identification badge system 10 of the present invention would authenticate the identification of the visitor or guest by comparing the photo ID to the face of the visitor or guest. In one embodiment, the base station 12 can be used to charge the badges.

Alternatively, the image, along with any other identification, of a visitor or guest may be provided electronically in advance of the visitor or guest arrival. The data for the visitor or guest may be relayed to a computer that is connected to the base station. Or the data may be provided to the base station 12 with a portable drive, such as an external hard drive, a thumb drive, or the like. In such case, the visitor or guest may be provided with a barcode or QR code receipt, for example, for presenting to an operator of the identification badge system 10 of the present invention who can scan it with a barcode reader or QR code reader to produce an image on the reusable badge 20.

This is particularly advantageous when a large group of visitors or guests are expected to arrive concurrently, for example, in time for a meeting, or for VIP guests who do not have time to wait for a long authentication and printing process. This is also advantageous, for example, at a conference or other event, where visitors or guests are required to pre-register and/or pre-pay for access to the conference. The visitor or guest may be provided with a barcode or QR code receipt, after pre-registering and uploading an electronic image of themselves. Then when they arrive at the check-in desk, they provide the receipt to a greeter, who scans the information with a barcode reader or QR code reader to bring up the electronic image for relaying to the base station 12, and authenticates the identification of the visitor or guest by comparing the photo ID to the face of the visitor or guest.

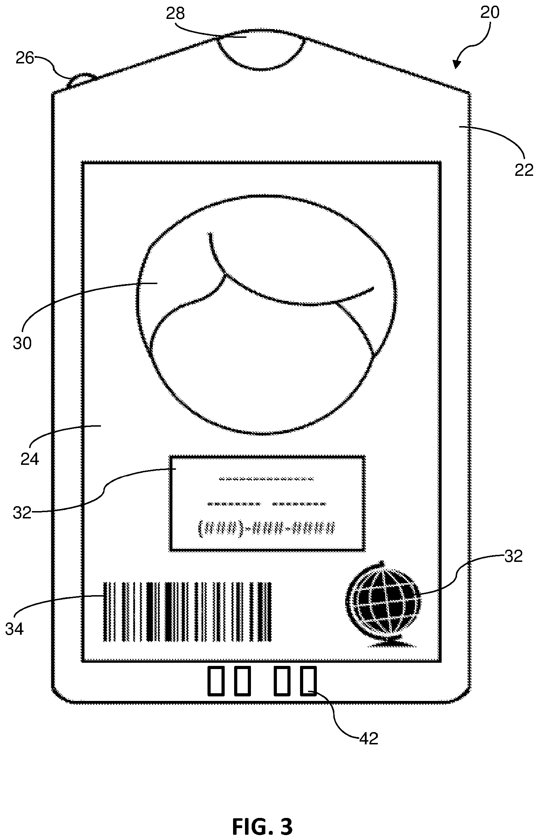

One embodiment of the reusable badge 20 of the present invention is illustrated more clearly in Fig. 3. The reusable badge 20 has a housing 22, an e-paper display 24, and a readiness indicator. (In alternative embodiments, a gray-scale e-paper or a black and white e-paper display could be used). The readiness indicator is depicted in Figs. 1 - 3 as an indicator light 26. However, it will be understood by those skilled in the art that the readiness indicator may be a lit-up backlight on the e-paper display or an audible signal (not shown), without departing from the spirit of the invention.

The housing 22 is preferably made of plastic to protect the e-paper display 24, while being lightweight enough so as not to overly burden the visitor or guest. The housing 22 is provided with suitable contacts on its base, sides or back for communicating with the base station 12 when the reusable badge 20 is docked in the docking receptacle 14. In the embodiment shown in Fig. 3, contacts 42 are provided on the front face of the housing 22 for contacting corresponding base station contacts (not shown). It will be understood by those skilled in the art that other numbers or configurations of contacts 42 may be possible.

The housing 22 is preferably provided with a loop 28 to enable a visitor or guest to carry the reusable badge 20 with a lanyard, strap, clip or the like.

The e-paper display 24 can be provided with e-ink, which is an electrophoretic display composed of a large number of light and dark nanoparticles suspended between two plates of electrostatically-charged glass. E-paper mimics the appearance of ink in an electronic display. The display may be black and white or colored, depending on the requirements and/or wishes of the employer and/or event. Suitable electronic displays can be provided by a variety of technologies, including, without limitation, electrophoretic, electrowetting, electrofluidic, interferometric modulator, and plasmonic techniques. In one embodiment, color transparent film (not shown) can be placed over the display portion of the reusable badge 20, and particularly over at least a portion of the e-paper display 24 such as for non-limiting example the photograph for differentiation of visitors, vendors and other temporary personnel.

An image 30 of the visitor or guest is transmitted from the image relaying device to the base station 12 and is communicated to the reusable badge 20 when the reusable badge 20 is docked in the base station 12.

Preferably, additional information 32 is provided including, without limitation, the visitor or guest name, company name, name of person being visited, phone number of person being visited, expected duration of stay, company logo of visitor or guest, logo of event or company being visited, reason for the visit and the like.

In another embodiment, an identifying symbol, such as a bar code 34 or QR code is relayed through the base station 12 to the e-paper display 24. The identifying symbol may include further detail on the visitor or guest, authorization to access special events, such as pre-paid lunches, within a larger event, important medical or allergy information, ICE numbers, and the like.

The indicator light 26 signals that the base station 12 has completed communication of the electronic image 20 and any additional information 32 and/or identifying symbol 34 to the e-paper display 24. The indicator light 26 signals that the reusable badge 20 may be removed from the base station 12. The e-paper display 24 maintains the electronic image 30 after the reusable badge 20 is removed from the base station 12, without the need for a power supply in the reusable badge 20. In one embodiment, indicator light 26, or another or additional indicator light (not shown) can show battery level or power level of the badge and/or can be used for emergency notification, such as for non-limiting example to flash in an emergency.

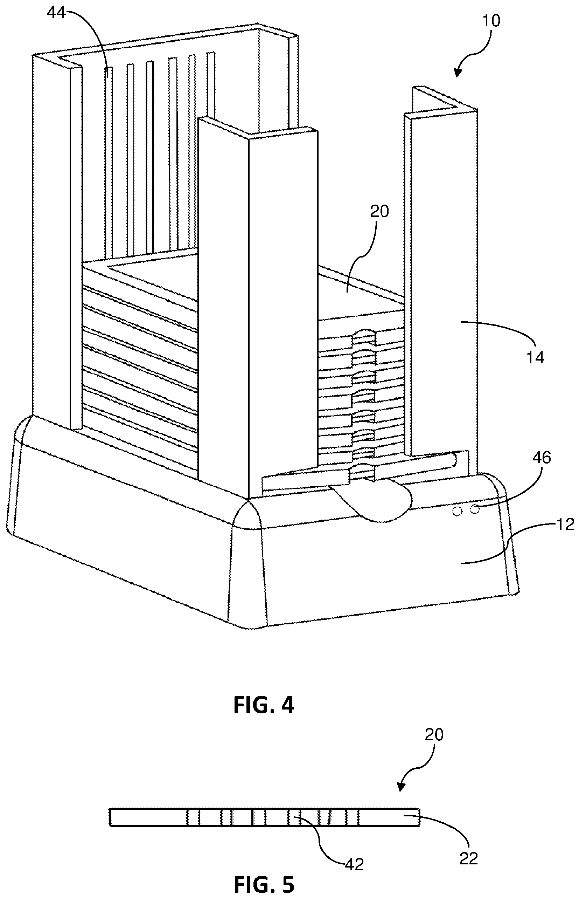

Another embodiment of the identification badge system 10 of the present invention is shown in Figs. 4 and 5. In this embodiment, reusable badges 20 are stacked in a single docking receptacle 14. Contacts 42 are provided on the base of the reusable badge 20 and are configured to engage corresponding contacts 44 on an inner back face of the docking receptacle 14.

Also, in the embodiment shown in Figs. 4 and 5, the readiness indicator is an indicator light 46 on the base station 12. The indicator light 46 signals that the reusable badge 20 may be removed from the base station 12. The e-paper display 24 maintains the electronic image 30 after the reusable badge 20 is removed from the base station 12, without the need for a power supply in the reusable badge 20.

In a further embodiment, the reusable badge 20 has a radio frequency identification tag ("an RFID tag") (not shown) housed in the housing 22. Preferably, the RFID tag is a HF RFID tag or a UHF RFID tag.

The RFID tag is adapted to communicate with an RFID reader, for example, equipped within the base station 12. Alternatively, the RFID reader may be a separate piece of equipment. Preferably, the base station 12 is equipped with an RFID reader (not shown).

The RFID tag may be used to provide tracking information, including, without limitation, a time stamp for removing the reusable badge from the base station, a time stamp for re-docking the reusable badge at the base station, electronic image 30 information, electronic identity information associated with the electronic image 30, accountable person information, authentication information, and combinations thereof. The RFID tag inside the reusable badge 20 can communicate with standard access control readers, writers, and controllers at secure facilities.

More particularly, RFID (Radio-frequency identification) uses electromagnetic fields to automatically identify and track RFID tags attached to objects. The electromagnetic fields can be generated by access readers that are usually located near an entryway, for example. The generated field activates the RFID tag and causes it to transmit the data stored within it. The data is then read by the access readers and later stored. This data contains a unique ID number that is used to identify each tag. In one embodiment, the tracking element of this process is simply logging the date and time of each unique tag when activated and read by a reader fixed at a known location.

In one embodiment, the reusable badge 20 has a Wi-Fi transponder and circuitry for real-time location tracking (RTLS). The reusable badge 20 sends a radio frequency signal to Wi-Fi routers or Bluetooth beacons in a facility. This tracking includes real-time location tracking using GPS (Global Positioning System) and can provide for historical location tracking information to be stored in a secure location apart from the digital visitor badge.

That is, in one embodiment, the Wi-Fi location tracking system leverages existing Wi-Fi sources, e.g., routers and access points, to track the location of a visitor badge. The transponder and associated circuitry inside the badge of the invention use standard Wi-Fi frequencies to detect these sources for which the locations are known. Data such as signal strength, atmospheric pressure and SSID (Name associated with a wireless local area network) are gathered and transmitted via the same Wi-Fi infrastructure to software waiting to receive them. Using several techniques, the position of a badge relative to the Wi-Fi sources can be calculated in 3D space with varying degrees of accuracy.

In one embodiment, the Wi-Fi tracking system will also take advantage of backscatter to encode information on Wi-Fi signals with little or no energy from a battery. Current routers and access points are designed to filter out backscatter as it is considered noise and not used for communications. Custom firmware on routers and access points will use a digital envelope detector and low pass filter to extract the encoded information from the received backscatter. The badge's ID will be invisibly encoded in the actual housing and read using backscatter.

In another embodiment, the reusable badge 20 is provided with a power supply, for example a battery (not shown) or a capacitor (not shown).

For example, a capacitor may be provided to hold a charge sufficient to erase the electronic image 30 from the e-paper display 24 if the reusable badge 20 is not re-docked within a prescribed period of time. Alternatively, the capacitor may provide a charge sufficient to overwrite the electronic image from the e-paper display if the reusable badge is not re-docked within a prescribed period of time, for example, with a message indicating that the reusable badge 20 has expired, with a pictorial image, a text image, a notice to call a security phone number, a prescribed expiration color, cross-hatching and combinations thereof.

According to the invention, internal circuitry in the badge is programed or otherwise designed to self-destruct to disable the badge, if and when after activation of the badge, the badge loses connectivity with the facility Wi-Fi, Bluetooth or other electronic communication devices at the facility.

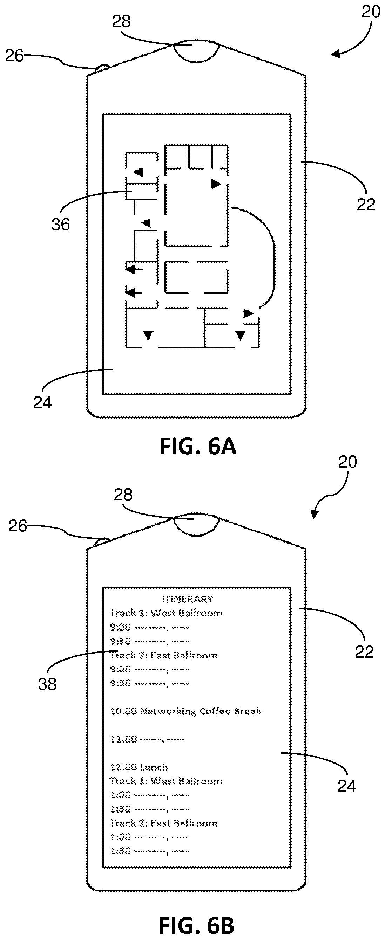

In yet another embodiment, a battery, which may be a reusable battery, is provided, for example, to allow a visitor or guest to access informational or safety information, for example, on a second page of the reusable badge 20, as explained for the embodiments of Figs. 6A and 6B.

Figs. 6A and 6B illustrate further embodiments of the reusable badge 20 of the identification badge system 10 of the present invention. Often when visitor or guests are checked-in at a restricted access facility, they are provided with an additional pamphlet with safety information, including, for example, a fire escape map. The e-paper display 24 of the present invention can be configured to allow for a finger-swipe, for example, to at least one additional display page of the e-paper display 24 showing safety information, for example, a fire escape plan 36, as depicted in Fig. 6A. Other types of safety information may include emergency numbers, laboratory safety precautions, information about site-specific dangers, and the like. In one embodiment, the reusable badge 20 has an internal buzzer for emergency notification. Preferably, the e-paper display 24 defaults back to the electronic image 30 within a prescribed period of time.

Alternatively, or in addition to the safety information, the e-paper display 24 of the present invention can be configured to include at least one additional page for a conference or meeting itinerary 38, as illustrated in Fig. 6B, or other desired information for the visitor.

## Claims

1. A temporary/visitor identification badge system for use at a facility, comprising:
- an image relaying device for communicating an electronic image of a person or a person's name, record ID number or other identifying mark or information;
- a readiness indicator; and
- a reusable badge having: a housing; a buzzer or vibration device; a colored e-paper display or colored film placed over a black and white e-paper display or gray-scale e-paper display or black and white e-paper display; a GPS chip and associated circuitry for Real-Time Location Tracking (RTLS) or Global Positioning System (GPS) location tracking, and a Wi-Fi or Bluetooth transponder for communication and data transfer with the badge including an electronic image of a person or a person's name, record ID number or other identifying mark or information; and internal electrical components comprising components that physically self-destruct and/or automatically erase information, software, or firmware that relates to the use of the reusable badge when after activation of the badge, the badge loses connectivity with the facility Wi-Fi, Bluetooth or other electronic communication devices at the facility;
- a base station for charging the badge and communicating with the image relaying device, the base station having at least one docking receptacle;
- the housing being adapted to be docked in the at least one docking receptacle of the base station, for charging the badge and for communicating the electronic image from the base station to the e-paper display when the housing is docked in the at least one docking receptacle of the base station;
- the e-paper display being adapted to maintain the electronic image received from the image relaying device when the reusable badge is removed from the at least one docking receptacle of the base station;
- the readiness indicator being adapted to indicate when the base station has completed communication of the electronic image to the reusable badge, whereby the reusable badge is ready for use and removal from the base station;
- wherein the base station is adapted to erase the electronic image from the e-paper display when the reusable badge is re-docked into the at least one docking receptacle of the base station;
wherein the reusable badge further comprises an RFID tag; and
wherein the reusable badge further comprises a power supply.

2. The identification badge system according to claim 1 further comprising a storage location apart from the badge or the base station for receiving and storing badge location tracking information.

3. The identification badge system of claim 1 wherein the e-paper display is colored with an overlying film having at least one color.

4. The identification badge system of claim 1 wherein the e-paper display is colored with e-ink.

5. The identification badge system of claim 1 wherein the system is used at a facility having RFID readers at access points in the facility and the RFID tag in the reusable badge is used to communicate with said RFID readers.

6. The identification badge system according to claim 1, wherein the base station further comprises an RFID reader for communicating with the RFID tag, whereby information is communicated to the base station, the information being selected from the group consisting of a time stamp for removing the reusable badge from the base station, a time stamp for re-docking the reusable badge at the base station, electronic image information, electronic identity information associated with the electronic image, accountable person information, authentication information, and combinations thereof.

7. The identification badge system according to claim 1, wherein the RFID tag is selected from the group consisting of HF RFID tags, UHF RFID tags, and combinations thereof.

8. The identification badge system according to claim 1, wherein the power supply is a capacitor for holding a charge sufficient to erase the electronic image from the e-paper display if the reusable badge is not re-docked within a prescribed period of time.

9. The identification badge system according to claim 1, wherein the power supply is a capacitor for holding a charge sufficient to overwrite the electronic image from the e-paper display if the reusable badge is not re-docked within a prescribed period of time.

10. The identification badge system according to claim 1, wherein the power supply is a battery.

11. The identification badge system according to claim 1, wherein the base station is further adapted to communicate additional identification information to the reusable badge and the e-paper display further comprises at least one additional page of information.

12. The identification badge system according to claim 1, wherein the image relaying device is selected from the group consisting of a scanner, a camera, a QR reader, a bar code reader, and combinations thereof.

13. The identification badge system according to claim 1, wherein the base station is adapted to dock a plurality of reusable badges.

14. The identification badge system according to claim 1, wherein the base station is adapted to connect to a computer.

15. The identification badge system according to claim 1, wherein the readiness indicator is provided on the reusable badge.

16. The identification badge system according to claim 1, wherein the readiness indicator is provided on the base station.

## Patentansprüche

1. Temporäres/Besucher-Ausweisschildsystem zur Verwendung in einer Einrichtung, umfassend:
- eine Bildübertragungsvorrichtung zum Kommunizieren eines elektronischen Bildes einer Person oder des Namens einer Person, einer Datensatz-ID-Nummer oder eines anderen Identifizierungsmerkmals oder anderer Identifizierungsinformationen;
- eine Bereitschaftsanzeige; und
- ein wiederverwendbares Schild mit: einem Gehäuse; einem Signaltongeber oder einer Vibrationsvorrichtung; einem farbigen E-Paper-Display oder einem farbigen Film, der auf einem Schwarzweiß-E-Paper-Display aufgebracht ist, oder einem Graustufen-E-Paper-Display oder einem Schwarzweiß-E-Paper-Display; einem GPS-Chip und zugehörigen Schaltkreisen für Echtzeit-Standortverfolgung (Real-time Location Tracking - RTLS) oder Global Positioning System(GPS)-Standortverfolgung und einem WLAN- oder Bluetooth-Transponder zur Kommunikation und Datenübertragung mit dem Schild, das ein elektronisches Bild einer Person oder den Namen einer Person, eine Datensatz-ID-Nummer oder ein anderes Identifizierungsmerkmal oder andere Identifizierungsinformationen beinhaltet; und internen elektrischen Komponenten, die Komponenten umfassen, die Informationen, Software oder Firmware, die sich auf die Verwendung des wiederverwendbaren Schildes beziehen, physisch selbst zerstören und/oder automatisch löschen, wenn das Schild nach der Aktivierung des Schildes die Verbindung mit dem WLAN, Bluetooth der Einrichtung oder anderen elektronischen Kommunikationsvorrichtungen in der Einrichtung verliert;
- eine Basisstation zum Aufladen des Schildes und zum Kommunizieren mit der Bildübertragungsvorrichtung, wobei die Basisstation mindestens eine Andockaufnahme aufweist;
- wobei das Gehäuse dazu geeignet ist, an die mindestens eine Andockaufnahme der Basisstation zum Aufladen des Schildes und zum Kommunizieren des elektronischen Bildes von der Basisstation an das E-Paper-Display angedockt zu werden, wenn das Gehäuse an die mindestens eine Andockaufnahme der Basisstation angedockt ist;
- wobei das E-Paper-Display dazu geeignet ist, das von der Bildübertragungsvorrichtung empfangene elektronische Bild beizubehalten, wenn das wiederverwendbare Schild von der mindestens einen Andockaufnahme der Basisstation entfernt wird;
- wobei die Bereitschaftsanzeige dazu geeignet ist anzuzeigen, wenn die Basisstation die Kommunikation des elektronischen Bildes an das wiederverwendbare Schild abgeschlossen hat, wodurch das wiederverwendbare Schild zur Verwendung und Entfernung von der Basisstation bereit ist;
- wobei die Basisstation dazu geeignet ist, das elektronische Bild von dem E-Paper-Display zu löschen, wenn das wiederverwendbare Schild erneut an der mindestens einen Andockaufnahme der Basisstation angedockt wird;
wobei das wiederverwendbare Schild ferner ein RFID-Tag umfasst; und
wobei das wiederverwendbare Schild ferner eine Stromversorgung umfasst.

2. Ausweisschildsystem nach Anspruch 1, ferner umfassend einen Speicherort neben dem Schild oder der Basisstation zum Empfangen und Speichern von Schildposition-Tracking-Informationen.

3. Ausweisschildsystem nach Anspruch 1, wobei das E-Paper-Display mit einem darüberliegenden Film mit mindestens einer Farbe gefärbt ist.

4. Ausweisschildsystem nach Anspruch 1, wobei das E-Paper-Display mit E-Tinte gefärbt ist.

5. Ausweisschildsystem nach Anspruch 1, wobei das System in einer Einrichtung mit RFID-Lesegeräten an Zugangspunkten in der Einrichtung verwendet wird und das RFID-Tag in dem wiederverwendbaren Schild verwendet wird, um mit den RFID-Lesegeräten zu kommunizieren.

6. Ausweisschildsystem nach Anspruch 1, wobei die Basisstation ferner ein RFID-Lesegerät zum Kommunizieren mit dem RFID-Tag umfasst, wodurch Informationen an die Basisstation kommuniziert werden, wobei die Informationen aus der Gruppe bestehend aus einem Zeitstempel zum Entfernen des wiederverwendbaren Schildes von der Basisstation, einem Zeitstempel zum erneuten Andocken des wiederverwendbaren Schildes an die Basisstation, elektronischen Bildinformationen, elektronischen Identitätsinformationen, die dem elektronischen Bild zugeordnet sind, Informationen über verantwortliche Personen, Authentifizierungsinformationen und Kombinationen davon ausgewählt sind.

7. Ausweisschildsystem nach Anspruch 1, wobei das RFID-Tag aus der Gruppe bestehend aus HF-RFID-Tags, UHF-RFID-Tags und Kombinationen davon ausgewählt ist.

8. Ausweisschildsystem nach Anspruch 1, wobei die Stromversorgung ein Kondensator zum Halten einer Ladung ist, die ausreicht, um das elektronische Bild von dem E-Paper-Display zu löschen, wenn das wiederverwendbare Schild nicht innerhalb einer vorgeschriebenen Zeitspanne erneut angedockt wird.

9. Ausweisschildsystem nach Anspruch 1, wobei die Stromversorgung ein Kondensator zum Halten einer Ladung ist, die ausreicht, um das elektronische Bild von dem E-Paper-Display zu überschreiben, wenn das wiederverwendbare Schild nicht innerhalb einer vorgeschriebenen Zeitspanne erneut angedockt wird.

10. Ausweisschildsystem nach Anspruch 1, wobei die Stromversorgung eine Batterie ist.

11. Ausweisschildsystem nach Anspruch 1, wobei die Basisstation ferner dazu geeignet ist, zusätzliche Identifizierungsinformationen an das wiederverwendbare Schild zu kommunizieren, und das E-Paper-Display ferner mindestens eine zusätzliche Seite mit Informationen umfasst.

12. Ausweisschildsystem nach Anspruch 1, wobei die Bildübertragungsvorrichtung aus der Gruppe bestehend aus einem Scanner, einer Kamera, einem QR-Lesegerät, einem Strichcode-Lesegerät und Kombinationen davon ausgewählt ist.

13. Ausweisschildsystem nach Anspruch 1, wobei die Basisstation dazu geeignet, eine Vielzahl von wiederverwendbaren Schildern anzudocken.

14. Ausweisschildsystem nach Anspruch 1, wobei die Basisstation dazu geeignet ist, mit einem Computer verbunden zu werden.

15. Ausweisschildsystem nach Anspruch 1, wobei der Bereitschaftsindikator auf dem wiederverwendbaren Schild bereitgestellt wird.

16. Ausweisschildsystem nach Anspruch 1, wobei der Bereitschaftsindikator an der Basisstation bereitgestellt wird.

## Revendications

1. Un système de badge d'identification temporaire/ visiteur pour une utilisation sur site comprenant :
- un dispositif de relais d'images pour la transmission de toute image électronique d'une personne ou du nom d'une personne, de son numéro d'identification de dossier ou de tout autre élément d'identification ou renseignement y afférent ;
- un indicateur de disponibilité opérationnelle ; et
- un badge réutilisable aux caractéristiques suivantes : un boîtier ; un avertisseur sonore ou un dispositif d'alerte par vibration ; un afficheur papier électronique couleur ou un film couleur placé au-dessus d'un afficheur papier électronique noir et blanc ou en nuances de gris ou encore un afficheur papier électronique noir et blanc ; une puce GPS ainsi que son ensemble de circuits connexes pour un Suivi de localisation en temps réel (SLTR) ou suivi de localisation par Système de positionnement global (GPS), ainsi qu'un transpondeur Wi-Fi ou Bluetooth à des fins de communication et de transfert de données avec le badge, y compris toute image électronique d'une personne ou du nom d'une personne, de son numéro d'identification de dossier ou de tout autre élément d'identification ou renseignement y afférent ; ainsi que les composants électriques internes, y compris les composants qui s'autodétruisent physiquement et/ou qui effacent automatiquement les informations, logiciels ou micrologiciels qui se rapportent à l'utilisation du badge réutilisable lorsque le badge, une fois activé, perd sa connectivité avec le Wi-Fi ou le Bluetooth du site ou d'autres dispositifs de communication électronique se trouvant sur ledit site ;
- une station de base pour recharger le badge et communiquer avec le dispositif de relais d'images, la station de base disposant d'au moins un réceptacle de chargement ;
- un boîtier ayant été adapté pour pouvoir être apparié sur l'au moins un réceptacle de chargement de la station de base, à des fins de chargement du badge et de transmission de l'image électronique de la station de base vers l'afficheur papier électronique lorsque ledit boîtier est apparié sur l'au moins un réceptacle de chargement de la station de base ;
- un afficheur papier électronique ayant été adapté pour conserver l'image électronique reçue depuis le dispositif de relais d'images lorsque le badge réutilisable est retiré de l'au moins un réceptacle de chargement de la station de base ;
- un indicateur de disponibilité opérationnelle ayant été adapté pour indiquer lorsque la station de base a achevé la transmission de l'image électronique vers le badge réutilisable, procédé au terme duquel le badge réutilisable redevient prêt à l'emploi et peut être retiré de la station de base ;
- **caractérisé en ce que** la station de base est adaptée pour supprimer l'image électronique de l'afficheur papier électronique lorsque le badge réutilisable est réapparié sur l'au moins un réceptacle de chargement de la station de base ;
**caractérisé en ce que** le badge réutilisable comprend, par ailleurs, un marqueur RFID ; et
**caractérisé en ce que** le badge réutilisable comprend, par ailleurs, une alimentation.

2. Suivant la revendication 1, le système de badge d'identification qui comporte, par ailleurs, un espace de stockage distinct du badge ou de la station de base permettant la réception et le stockage d'informations de suivi de localisation du badge.

3. Suivant la revendication 1, le système de badge d'identification **caractérisé en ce que** l'afficheur papier électronique est coloré par superposition d'un film ayant au moins une couleur.

4. Suivant la revendication 1, le système de badge d'identification **caractérisé en ce que** l'afficheur papier électronique est coloré avec de l'encre électronique.

5. Suivant la revendication 1, le système de badge d'identification **caractérisé en ce que** le système est utilisé sur un site doté de lecteurs RFID au niveau des points d'accès du site et que le marqueur RFID du badge réutilisable sert à communiquer avec lesdits lecteurs RFID.

6. Suivant la revendication 1, le système de badge d'identification **caractérisé en ce que** la station de base est équipée, par ailleurs, d'un lecteur RFID pour communiquer avec le marqueur RFID, grâce auquel des informations sont transmises à la station de base, lesdites informations étant sélectionnées parmi un ensemble de données constitué de l'horodatage de retrait du badge réutilisable de la station de base, l'horodatage de réappariement du badge réutilisable à la station de base, des informations relatives aux images électroniques, des informations d'identification électronique associées à l'image électronique, des informations relatives à la personne responsable, des informations d'authentification ainsi que toute autre combinaison des éléments précités.

7. Suivant la revendication 1, le système de badge d'identification **caractérisé en ce que** le marqueur RFID est sélectionné parmi un ensemble d'éléments dont les marqueurs HF RFID, les marqueurs UHF RFID, ainsi que toute autre combinaison des éléments précités.

8. Suivant la revendication 1, le système de badge d'identification **caractérisé en ce que** l'alimentation est un condensateur destiné à maintenir une charge suffisante afin de supprimer l'image électronique de l'afficheur papier électronique si le badge réutilisable n'est pas réapparié dans les délais prédéfinis.

9. Suivant la revendication 1, le système de badge d'identification **caractérisé en ce que** l'alimentation est un condensateur destiné à maintenir une charge suffisante afin de remplacer l'image électronique de l'afficheur papier électronique si le badge réutilisable n'est pas réapparié dans les délais prédéfinis.

10. Suivant la revendication 1, le système de badge d'identification **caractérisé en ce que** l'alimentation est une batterie.

11. Suivant la revendication 1, le système de badge d'identification **caractérisé en ce que** la station de base est également adaptée pour communiquer des informations d'identification supplémentaires au badge réutilisable et que l'afficheur papier électronique comprend également au moins une page supplémentaire d'informations.

12. Suivant la revendication 1, le système de badge d'identification **caractérisé en ce que** le dispositif de relais d'images est sélectionné parmi un ensemble d'éléments dont un scanner, un appareil photo, un lecteur QR, un lecteur de codes-barres, ainsi que toute combinaison des éléments précités.

13. Suivant la revendication 1, le système de badge d'identification **caractérisé en ce que** la station de base a été adaptée pour apparier une multitude de badges réutilisables.

14. Suivant la revendication 1, le système de badge d'identification **caractérisé en ce que** la station de base a été adaptée pour connecter un ordinateur.

15. Suivant la revendication 1, le système de badge d'identification **caractérisé en ce que** le badge réutilisable est équipé d'un indicateur de disponibilité opérationnelle.

16. Suivant la revendication 1, le système de badge d'identification **caractérisé en ce que** la station de base est équipée d'un indicateur de disponibilité opérationnelle.
